# EUROPÄISCHE PATENTSCHRIFT

(11) **EP 0 372 239 B1**
(45) Veröffentlichungstag und Bekanntmachung des Hinweises auf die Patenterteilung: **26.05.1993**
(21) Anmeldenummer: 89120557.7
(22) Anmeldetag: 07.11.1989
(51) Int. Cl.: C08F 6/08, C08F 10/02, C08F 4/68

(54) **Verfahren zur Herstellung von Ethylenpolymerisaten mittels eines Vanadin enthaltenden Ziegler-Katalysatorsystems unter Zerstörung überschüssiger Katalysatorreste.**
Process for preparing ethylene polymers by means of a vanadium-containing Ziegler catalyst system while destroying the catalyst residue.
Procédé de préparation de polymères d'éthylène à l'aide d'un système catalytique Ziegler à base de Vanadium avec destruction des restes catalytiques.

(30) Priorität: 12.11.1988 DE 3838492
(43) Veröffentlichungstag der Anmeldung: 13.06.1990
(73) Patentinhaber: BASF Aktiengesellschaft, 67063 Ludwigshafen (DE)
(72) Erfinder: Saive, Roland, Dr., D-6700 Ludwigshafen (DE); Funk, Guido, Dr., D-6520 Worms 1 (DE); Bauer, Peter, D-6700 Ludwigshafen (DE); Konrad, Rainer, Dr., D-6701 Goennheim (DE)

(56) Entgegenhaltungen:
- EP-A- 0 004 601
- EP-A- 0 312 948
- EP-A- 0 341 540
- FR-A- 2 253 031
- US-A- 4 731 438

## Beschreibung

Die Erfindung betrifft ein Verfahren zur Herstellung von Ethylenpolymerisaten durch Polymerisation der Monomeren in einer Polymerisationszone bei Drücken von 5 bis 60 bar und Temperaturen bis 120^{o}C in einer gerührten oder gewirbelten Trockenphase oder in niedrigsiedenden Kohlenwasserstoffen als Suspensionsmittel in Gegenwart eines Vanadin enthaltenden Ziegler-Katalysatorsystems, Abtrennen der entstandenen festen Ethylenpolymerisate von nichtumgesetzten Monomeren und ggf. Suspensionsmittel nach Druckverminderung in einer Entspannungszone, Entfernen der Restanteile an Monomeren und ggf. Suspensionsmittel in einer Entgasungszone durch Einleiten eines Inertgasstroms und Überführen des festen Ethylenpolymerisats in eine Aufschmelzzone, wo das Polymerisat erstmals mit Luft in Kontakt kommt.

Bei derartigen Verfahren können Homo- und Copolymerisate des Ethylens mit Dichten zwischen 0,915 und 0,970 g/cm³ und Schmelzindexwerten von 0,01 bis 100 g/10 min erhalten werden, wobei nicht einpolymerisierte Monomere und andere Begleitstoffe in einer Entgasungszone mit Hilfe eines Inertgasstromes entfernt werden.

Die Entfernung von nicht einpolymerisierten Monomeren und anderen Begleitstoffen aus Ethylenhomo- oder -copolymerisaten ist erforderlich, da diese Stoffe die Produktqualität durch ihren Eigengeruch mindern. Die Reinigung der Ethylenpolymerisate von anhaftenden Monomeren, Geruchsstoffen bzw. von Suspensions- oder Lösungsmitteln ist seit längerem bekannt. So kann zur Entfernung der flüchtigen Kohlenwasserstoffe ein Inertgasstrom, z.B. aus Kohlendioxid oder Stickstoff verwendet werden (vgl. US-A-3 152 872, US-A-4 258 158, US-A-4 372 758, US-A-4 372 758, EP-B1-0 127 253), das Endprodukt kann mit flüssigem Olefin gewaschen werden (vgl. US-A-4 214 063) oder es kann das Entgasen des Polyolefinpulvers mit gesättigten aliphatischen Kohlenwasserstoffen vorgenommen werden (vgl. Chemical Abstracts 103, 1985, 54 599 r).

In den deutschen Patentanmeldungen P 37 35 937 und P 38 15 487 sind Verfahren zur Entfernung von Suspensionsmittel und von nicht umgesetzten Monomeren vorgeschlagen, wobei die Restanteile nach Durchschleusen durch eine Entspannungszone in einer Entgasungszone, auch Trocknungszone genannt, durch Einleiten eines Inertgasstroms entfernt werden oder wobei zunächst mit Ethylen vorgespült und anschließend mit einem Gemisch aus Stickstoff und Wasserdampf nachgespült wird.

Aus den Literaturstellen EP-A-0 116 917, 0 140 131 und 0 193 261 ist es bekannt zur Deaktivierung eines Katalysatorsystems aus einer Übergangsmetallverbindung und einer organischen Aluminiumverbindung, die zur Polymerisation von Ethylen oder zur Copolymerisation von Ethylen mit einem α-Olefin eingesetzt werden, sog. Deaktivatoren einzusetzen. Die Deaktivatoren reagieren mit den aktiven Katalysatorresten irreversibel unter Bildung von nichtflüchtigen und nichtpolymerisierbaren Verbindungen, wobei der Geruch des Polymerisats vermindert werden kann. Die bekannten Verfahren weisen aber noch den Nachteil auf, daß eine Verminderung des Carbonylgruppengehalts der erhaltenen Ethylenpolymerisate, der bei Verwendung eines Vanadin enthaltenden Katalysators besonders hoch ist, nicht beobachtet worden ist.

Weiterhin wird in der FR-A 2 253 031 ein Verfahren zur Entfärbung von Polyolefinen beschrieben, wobei diese mit C₂- bis C₄-Alkanolen umgesetzt werden. Die Polyolefine werden dabei im geschmolzenen Zustand mit den Alkanolen umgesetzt. Aufgabe der vorliegenden Erfindung war es, ein Verfahren zur Herstellung von Ethylenpolymerisaten mittels eines Vanadin enthaltenden Ziegler-Katalysatorsystems zur Verfügung zu stellen, bei dem ein Ethylenpolymerisat mit stark verminderter Geruchsbildung und guter thermischer Stabilität resultiert.

Diese Aufgaben wurden durch ein Verfahren der eingangs angegebenen Art gelöst, wobei erfindungsgemäß das Ethylenpolymerisat in der Entgasungszone bei Temperaturen von 50 bis 80°C mit OH-Gruppen enthaltenden Zusätzen umgesetzt wird.

Bevorzugt ist der OH-Gruppen enthaltende Zusatz Wasser oder ein C₁- bis C₁₀-Alkohol.

Bevorzugt ist auch ein Verfahren bei dem das Ethylenpolymerisat mit 0,02 bis 2 Gew.% Zusätze umgesetzt wird.

In der Entgasungszone herrscht eine Temperatur von 50 bis 80°C und ein Druck von 1 bis 1,2 bar.

Besonders bevorzugt ist auch ein Verfahren bei dem das Ziegler-Katalysatorsystem aus einer Vanadin-, einer Organoaluminium- und einer Organohalogen-Katalysatorkomponente besteht.

Die Aufgaben wurden ferner gelöst durch Ethylenpolymerisate mit vermindertem Carbonylgruppengehalt hergestellt nach einem der oben angegebenen Art.

Verfahren der eingangs angegebenen Art sind bekannt und werden industriell ausgeübt, so daß sich eine ausführlichere Beschreibung derselben erübrigt (vgl. z.B. Ullmanns Encyklopädie der technischen Chemie, 4. Auflage, 1980, Band 19, Seiten 178 bis 186 oder Encyclopedia of Polymer Science and Engineering, 2. Auflage, 1986, Band 6, Seiten 436 bis 438). Unter Ethylenpolymerisaten werden hierbei die Homopolymerisate des Ethylens sowie die Copolymerisate aus überwiegender Menge von Ethylen mit anderen α-Olefinen verstanden.

Die beim Verfahren einzusetzenden Stoffe sind die üblichen. Dies gilt für die Monomeren, wie insbesondere Ethylen und für die Comonomeren wie Propylen, Buten-1, Hexen-1, 4-Methylpenten-1 oder Octen-1 sowie für die ggf. vorhandenen niedrigsiedenden Kohlenwasserstoffe, bevorzugt gesättigte C₃- bis C₈-Kohlenwasserstoffe, als Suspensionsmittel. Der Gehalt der im Ethylenpolymerisat gegebenenfalls einpolymerisierten Comonomeren liegt bevorzugt zwischen 1 und 20 Gew.%. Üblich sind auch die verwendeten Vanadin enthaltenden Katalysatorensysteme vom Ziegler-Typ, wobei der Katalysatortyp, der Gegenstand der EP-A 166 888 ist, bevorzugt ist. Gleiches gilt auch für das zum Nachspülen der festen Phase dienende Inertgas.

Das Abtrennen des Gemischs aus festem Ethylenpolymerisat und nicht umgesetzten gasförmigen Monomeren erfolgt durch kontinuierliches Austragen des Gemischs in eine Entspannungszone, die als üblicher Austragsbehälter ausgebildet ist und in der ein Druck von 0,1 bis 3 bar, bevorzugt 1 bis 1,2 bar sowie eine Temperatur von 40 bis 120°C herrscht, so daß sich eine gasförmige Phase ausbilden kann, die im wesentlichen aus Monomeren besteht, und eine feste Phase, die im wesentlichen aus Ethylenpolymerisat und 0,1 bis 8 Gew.%, bezogen auf das Gewicht des Polymerisats, aus anhaftenden Monomeren und ggf. Suspensionsmittel besteht. Es ist üblich, die aus dem Polymerisat abgetrennten Monomeren und ggf. das abgetrennte Suspensionsmittel in die Polymerisationszone zurückzuführen. Ergänzend wird hierzu noch auf die eingangs zitierte Literatur sowie insbesondere auf die EP-A-0 174 620 hingewiesen.

Von der Entspannungszone aus gelangt der Polymerisatgrieß, der noch Restanteile Monomer und ggf. Suspensionsmittel enthält, in eine Entgasungszone, auch Entgasungsbehälter genannt, in der bevorzugt ein Druck von 1 bis 1,2 bar herrscht. In der Entgasungszone herrscht eine Temperatur zwischen 50 und 80°C, die Trocknung bzw. Entgasung selbst kann z.B. in Wendeltrocknern in einem Strom aus Inertgas vorgenommen werden. Als Inertgas ist Stickstoff oder Ethylen besonders geeignet (vgl. auch die deutsche Patentanmeldung P 37 35 937.1).

Nach bekannten Verfahren wird aus der Entgasungszone festes Ethylenpolymerisat ausgetragen und in eine Aufschmelzzone, die üblicherweise in einem Extruder ausgebildet ist, gefördert, wo das Ethylenpolymerisat erstmals mit Luft in Kontakt kommt.

Nach erfindungsgemäßem Verfahren soll das Ethylenpolymerisat in der Entgasungszone, also bevor es mit Luft in Kontakt kommt, mit OH-Gruppen enthaltenden Zusätzen umgesetzt werden. Die OH-Gruppen enthaltenden Zusätze sind bevorzugt Wasser, C₁- bis C₁₀-Alkohole, insbesondere Isopropanol, Octanol oder Methanol.

Das Ethylenpolymerisat wird bevorzugt mit 0,02 bis 2, insbesondere 0,1 bis 0.5 Gew.%, bezogen auf das Gewicht des Ethylenpolymerisats, der Zusätze umgesetzt. In der Entgasungszone herrscht dabei eine Temperatur von 50 bis 80, insbesondere 60 bis 70°C und ein Druck von 1 bis 1,2 bar. Ein bevorzugtes Vanadin enthaltendes Ziegler-Katalysatorsystem besteht aus einer Vanadin-, einer Organoaluminium- und einer Organohalogenkatalysatorkomponente, wie beispielsweise in der EP-A-166 888 beschrieben. Bei dem erfindungsgemäßen Verfahren werden die aktiven Katalysatorreste im Polymerisat irreversibel und vollständig zersetzt, so daß bei Zutritt von Luft keine unerwünschten Reaktionen zu Carbonylgruppen enthaltenden Ethylenpolymerisaten stattfinden können.

Es ist ein Vorteil des erfindungsgemäßen Verfahrens, daß Ethylenpolymerisate mit Vanadin enthaltenden Ziegler-Katalysatoren hergestellt werden können, die nahezu keine Carbonylgruppen enthalten. Ein weiterer Vorteil des erfindungsgemäßen Verfahrens ist die Möglichkeit der Herstellung von Ethylenpolymerisaten mit Hilfe von Vanadin enthaltenden Ziegler-Katalysatoren, wobei die Polymerisate nach der Entgasung eine verminderte Geruchsbildung aufweisen und bezüglich der thermischen Stabilität deutlich verbesserte Eigenschaften zeigen.

### Beispiel 1

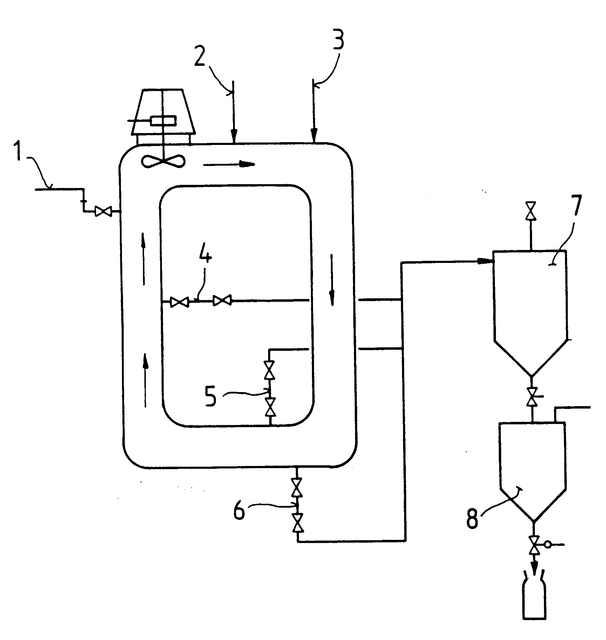

In einem kontinuierlichen Polymerisationsverfahren, bei dem das entstehende Polymerisat als Suspendiertes anfällt, wurde mit einem Katalysator, wie er in der EP-A-166888 beschrieben ist, ein Ethylen-Buten-Copolymer hergestellt. Dazu bediente man sich eines Schleifenreaktors, wie in der Abbildung dargestellt, wobei die Hinweiszahlen 1 bis 3 Dosierstellen der Einsatzstoffe, 4 bis 6 Austragsstellen des Polymerisats, 7 der Austragsbehälter und 8 der Entgasungsbehälter bedeuten. Im Entgasungsbehälter 8 wurde das Polymerisat mit 0,25 Gew.% Wasser bei 50°C umgesetzt, wobei das Wasser als mit Wasserdampf gesättigter Stickstoffstrom eingebracht wurde. Die Umsetzungsdauer betrug 15 Minuten. Das Produkt wurde an Luft gelagert und wies nach zwei Tagen einen Carbonylgruppengehalt von 0,05 C-Atomen/1000 C (bestimmt durch IR-Spektroskopie) auf. In einem Geruchstest unter Berücksichtigung von DIN 10 955 ergab sich auf einer Skala von 1 (sehr schwacher Geruch) bis 5 (sehr starker Geruch) eine Note 2.

### Beispiel 2

Es wurde verfahren wie in Beispiel 1, jedoch wurde das erhaltene Copolymerisat im Entgasungsbehälter 8 mit 0,4 Gew.% Methanol umgesetzt, welches in Form eines gesättigten Stickstoff/Methanol-Dampfes eingebracht wurde. Die Reaktionstemperatur betrug 50°C, die Reaktionsdauer 20 min. Das Produkt wies nach zweitägiger Lagerung einen Carbonylgruppengehalt von 0,06 C-Atomen/1000 C auf. Die Geruchsnote (vgl. Beispiel 1) war 2.

### Vergleichsbeispiel

Es wurde wie in Beispielen 1 und 2 verfahren, jedoch wurde im Entgasungsbehälter 8 lediglich 20 min bei 50°C mit einem Stickstoffstrom gespült. Nach zweitägiger Lagerung war der Carbonylgruppengehalt im Produkt 0,19 C-Atome/1000 C. Die Geruchsnote (vgl. Beispiel 1) war 4,0.

## Patentansprüche

1. Verfahren zur Herstellung von Ethylenpolymerisaten durch Polymerisation der Monomeren in einer Polymerisationszone bei Drücken von 5 bis 60 bar und Temperaturen bis 120°C in einer gerührten oder gewirbelten Trockenphase oder in niedrigsiedenden Kohlenwasserstoffen als Suspensionsmittel in Gegenwart eines Vanadin enthaltenden Ziegler-Katalysatorsystems, Abtrennen der entstandenen festen Ethylenpolymerisate von nichtumgesetzten Monomeren und ggf. Suspensionsmittel nach Druckverminderung in einer Entspannungszone, Entfernen der Restanteile an Monomeren und ggf. Suspensionsmittel in einer Entgasungszone durch Einleiten eines Inertgasstroms und überführen des festen Ethylenpolymerisats in eine Aufschmelzzone, wo das Polymerisat erstmals mit Luft in Kontakt kommt, dadurch gekennzeichnet, daß das Ethylenpolymerisat in der Entgasungszone bei Temperaturen von 50 bis 80°C mit OH-Gruppen enthaltenden Zusätzen umgesetzt wird.

2. Verfahren nach Anspruch 1, dadurch gekennzeichnet, daß der OH-Gruppen enthaltende Zusatz Wasser ist.

3. Verfahren nach Anspruch 1, dadurch gekennzeichnet, daß der OH-Gruppen enthaltende Zusatz ein C₁- bis C₁₀-Alkohol ist.

4. Verfahren nach Anspruch 1, dadurch gekennzeichnet, daß das Ethylenpolymerisat mit 0,02 bis 2 Gew.% Zusätze umgesetzt wird.

5. Verfahren nach Anspruch 1, dadurch gekennzeichnet, daß in der Entgasungszone ein Druck von 1 bis 1,2 bar herrscht.

6. Verfahren nach Anspruch 1, dadurch gekennzeichnet, daß das Ziegler-Katalysatorsystem aus einer Vanadin-, einer Organoaluminium- und einer Organohalogen-Katalysatorkomponente besteht.

## Claims

1. A process for the preparation of an ethylene polymer by polymerizing the monomers in a polymerization zone under from 5 to 60 bar and at up to 120°C in a stirred or fluidized dry phase or in a low boiling hydrocarbon as a suspending agent in the presence of a vanadium-containing Ziegler catalyst system, isolating the resulting solid ethylene polymer from unconverted monomers and any suspending agents after reducing the pressure in a let-down zone, removing the residual amounts of monomers and any suspending agents in a devolatilization zone by passing in an inert gas stream and transferring the solid ethylene polymer to a melting zone where the polymer comes into contact with air for the first time, wherein the ethylene polymer is reacted with an OH-containing additive in the devolatilization zone at from 50 to 80°C.

2. A process as claimed in claim 1, wherein the OH-containing additive is water.

3. A process as claimed in claim 1, wherein the OH-containing additive is a C₁-C₁₀-alcohol.

4. A process as claimed in claim 1, wherein the ethylene polymer is reacted with from 0.02 to 2% by weight of the additive.

5. A process as claimed in claim 1, wherein a pressure of from 1 to 1.2 bar is maintained in the devolatilization zone.

6. A process as claimed in claim 1, wherein the Ziegler catalyst system consists of a vanadium catalyst component, an organoaluminum catalyst component and an organohalogen catalyst component.

## Revendications

1. Procédé de préparation de polymères d'éthylène par polymérisation des monomères dans une zone de polymérisation sous des pressions de 5 à 60 bar et à des températures allant jusqu'à 120°C, dans une phase sèche agitée ou fluidisée ou dans des hydrocarbures de bas point d'ébullition servant de milieu de suspension, en présence d'un système catalytique de Ziegler contenant du vanadium, séparation des polymères solides formés d'avec les monomères n'ayant pas réagi et éventuellement d'avec le milieu de suspension après abaissement de la pression dans une zone de détente, élimination des parts restantes de monomères et éventuellement de milieu de suspension dans une zone de dégazage par passage d'un courant de gaz inerte, et transfert du polymère d'éthylène solide dans une zone de fusion, où le polymère entre en contact avec l'air pour la première fois, caractérisé en ce que, dans la zone de dégazage, le polymère d'éthylène est mis en réaction avec des additifs contenant des groupements OH à des températures de 50 à 80°C.

2. Procédé selon la revendication 1, caractérisé en ce que l'additif contenant des groupements OH est de l'eau.

3. Procédé selon la revendication 1, caractérisé en ce que l'additif contenant des groupements OH est un alcool en C₁ à C₁₀.

4. Procédé selon la revendication 1, caractérisé en ce que le polymère d'éthylène est mis en réaction avec 0,02 à 2% en poids d'additifs.

5. Procédé selon la revendication 1, caractérisé en ce qu'une pression de 1 à 1,2 bar règne dans la zone de dégazage.

6. Procédé selon la revendication 1, caractérisé en ce que le système catalytique de Ziegler est constitué par un composant de catalyseur contenant du vanadium, par un composant organo-aluminique et par un composant organo-halogéné.
